# EUROPEAN PATENT APPLICATION

(11) **EP 2 073 501 A1**
(43) Date of publication of application: **24.06.2009**
(21) Application number: 07123760.6
(22) Date of filing: 20.12.2007
(51) Int. Cl.: H04L 29/08

(54) **A concentrator for storing and forwarding media content**

(71) Applicant: iNEWIT nv, 2800 Mechelen (BE)
(72) Inventor: Mortelmans, Paul Frans Marta, 2861 Sint-Katelijne-Waver (BE); Faes, KoenKarl Celest, 2018 Antwerpen (BE)
(74) Representative: Plas, Axel Ivo Michel

(57) **Abstract**

The present invention relates to a concentrator for storing and forwarding media content. The media content is sent from a content server to a plurality of media players. The concentrator has means for storing at least parts of the media content, means for retrieving missing parts of a media item requested by one of the media players from the content server or one or more intermediate concentrators or both and the concentrator has means for delivering the media item to one of the media players. The concentrator also contains means for automatically receiving an update for a playlist. The playlist is indicative for the available media content from the content server and an update is sent each time the playlist has changed.

## Description

### Field of the Invention

The present invention generally relates to delivery of media content and more in particular to devices for storing media content and forwarding media items to user equipment and intermediary devices.

### Background of the Invention

Delivery of media content such as movies or audio files over data networks is often a complex operation. The media content requires significant network resources to ensure timely delivery without too many errors to allow fluent playback of the media content. For instance in a media on demand system, a user wants to receive streaming media for immediate playback. However when insufficient resources are available, immediate or fluent playback of media items is not feasible. Therefore some solutions introduce a cache function in between a media content source and the end-user or the user equipment such as a media playback device, a mobile telephone, a set-top box, a computer, etc.

One example of such solutions is described in the US patent application US 2006/0282542 A1 titled "Systems and methods for efficient cache management in streaming applications" by Thomas Pickeny III et. al. In this patent application a streaming delivery accelerator (SDA) is used between a content provider and a client. When a request for content is made to the SDA, it verifies whether there is sufficient content in the cache to start serving the requested content to the client. If there is insufficient content or not all content is available, the SDA retrieves the remaining content from the content provider and serves it to the client. The SDA is further able to determine which content should be stored in the cache and which content should be discarded.

The solution of Pickney et. al. is able to deliver media content to a client and relieving the load on parts of the network between the client and the content provider. This is so because part of the content or all the content is stored on the SDA after request by a client. Thus, if the same content is requested a second time, the SDA is able to deliver that content to the requesting client without retrieving the content from the content provider or by retrieving only parts of the content. There is however a problem with keeping information on the SDA up to date. The SDA does not posses any information related to the time when content was last changed or when new content is available. Thus, the SDA may have outdated content in its cache and serve as such wrong content upon request by a client.

An obvious solution to the problem of outdated information is to query the content provider at regular intervals to determine which content is out-of-date. However this adds load on the communication network between the SDA and the content provider.

An alternative solution is presented in the US patent application US 2004/0181575 A1 titled "Method and apparatus for providing peer-to-peer push using broadcast query" by Terry Mallberg et. al. In this solution nodes are able to receive data from a content provider after responding to a broadcast query from the content provider. Thus, the content provider broadcasts a query and nodes can respond thereto. Every responding node is then able to receive data from the content provider without requesting it, in other words, the content provider pushes the content towards the nodes which responded to the broadcast query. The content provider pushes the data towards the nodes using a peer-to-peer connection and the data is stored in a cache for each client.

The advantage of the solution of Mallberg et. al. is that the distributed content stored in the cache is up-to-date. Thus, a user of a node is able to use the data without a need to worry whether the data is up-to-date and a node does not have to consult the content provider to verify the data. However, this means that each node receives all the data available from the content provider or a subset of data. For instance in case of a media on demand service, a node would have to receive all the available content which would place a large load on the peer-to-peer link and which would require a large storage capacity in the cache of the nodes. The node may filter the data to be stored by responding to specific broadcast queries and by ignoring other queries. However this requires that the node is aware of which data may be of interest to a user before the queries are received.

An additional problem with the solution of Mallberg et. al. is that it uses a peer-to-peer link. This means that the data is sent in Unicast from one point to another point. This may work well for a situation where only a single node is interested in particular data. However, because this system uses broadcast queries to inform nodes, multiple nodes may be interested in receiving the same information. In such scenario, the use of Unicast data transmission means additional load on the communication links between the nodes.

In conclusion, there are two different types of media or data delivery possible. The first type is based on pulling the information from a source, either by the client or end-user or by an intermediary node. The second type is based on pushing information towards other nodes such as the cache of a client's node or system. The problem with the first type is that information in the cache may become out-of-date. The problem with the second type is that information may be pushed which is not needed and thus resources are wasted.

It is an objective of the present invention to provide a device for media delivery which is able to deliver up-to-date media content and which reduces the amount of bandwidth needed to achieve that effect.

### Summary of the Invention

The objectives of the present invention are realized and the drawbacks of the prior art are overcome by a concentrator for storing and forwarding media content from a content server to a plurality of media players, the concentrator comprising:
- means for storing at least parts of the media content; and
- means for retrieving missing parts of a media item requested by one of the media players from the content server or one or more intermediate concentrators or both; and
- means for delivering the media item to the one of the media players,
characterized in that the concentrator further comprises:
- means for automatically receiving an update for a playlist indicative for the available media content from the content server each time the playlist has changed.

Indeed, by using a concentrator which is able to store media content and to forward the media content, a local cache of media content is obtained. Thus request for media content can be directed towards the concentrator which may be able to deliver or forward the requested content. The concentrator may deliver the content entirely from the cache or it may retrieve parts of the content or even the entire content from the content server. In addition, through automated updates of the playlist pushed into the concentrator, the latter is able to provide the most up-to-date version of the playlist and content to the media players. Having an up-to-date playlist allows the concentrator to determine whether requested media items that are available in the storage or parts that are available in the cache are up-to-date and could be forwarded to the media player or whether the concentrator should retrieve a new version from the content server.

The concentrator operates in two ways. First it is able to retrieve media content from a content server and it is able to store such content. The concentrator may store for instance the first few minutes of each media item to enable immediate delivery upon request and then retrieve the remainder of the media item when it is needed. Another option is for the concentrator to store all the media items that are requested or only the media items which are requested a number of times. The concentrator is also able to forward media items to media players upon request. A media player can retrieve the playlist from the concentrator and present it to a user of the media player. When the user selects a media item, the media player may contact the concentrator to request that particular item. If the concentrator has the requested media item in storage or at least a part thereof, it may begin the delivery of the available part of the media item. If the concentrator doesn't have the entire item in storage, it may contact the contact server for the missing part or it may contact another concentrator which may have the media item in storage. Thus, a concentrator may be in direct communication with the content server or there may be a cascade of concentrators which are able to provide the media items to media players or other concentrators.

The concentrator is further able to automatically receive a playlist from the content server or another concentrator when the playlist has changed. For instance, when new media content is added or when media content is removed from the content server. The updates may be in the form of an entire playlist or may represent the changes between the previous playlist and the most up-to-date playlist. The updates may be sent by the content server to each concentrator individually or may be forwarded by each concentrator to other concentrators, for instance when concentrators are organized in cascade.

Optionally in the concentrator for storing and forwarding media content according to the present invention, the means for automatically receiving an update for a playlist comprise an interface to a first communication network and the means for delivering the media item comprise an interface to a second communication network, the first network and the second network having different resources.

In a typical set-up, the media players are located at the premises of users or are carried around by users. Typically this means that the media players have a connection to an access network such as a wired or wireless network whereover media items can be delivered. The concentrator has an interface to the same network as the media player to enable the delivery of media content to the media player. The interface from the concentrator to the media players may connect the concentrator and the media players directly or through one or more intermediary nodes such as additional concentrators or other network nodes. On the other side, the concentrator also needs to receive updates to the playlist from the content server. The concentrator thereto contains a second interface which is connected to a different network. The invention is particularly advantageous when the network between the content provider and concentrator uses expensive resources such as UMTS or 3G wireless links. Since media items will no longer be sent needlessly over these links, a significant improvement of the efficiency of these expensive links is achieved. Further, it is avoided that frequently consulted items such as the playlist have to be sent over these expensive links each time a user requests them. Frequently changing content such as the playlist according to the present invention is pushed automatically up to the concentrator close to the users, such that only the last mile, i.e. the network in between the concentrator and the users, is plagued by the frequent consultations of such playlist.

Optionally for the concentrator for storing and forwarding media content according to the present invention, the first communication network is a wireless communication network.

Further optionally, the wireless communication network is according to the present invention one or more of the following:
- a Global System for Mobile communications or GSM network;
- a General Packet Radio Service or GPRS network;
- an Universal Mobile Telecommunications Services or UMTS network;
- a High-Speed Packet Access or HSPA network; and
- a WiFi network.

An example of such a scenario is where users generate content using their mobile devices such as mobile telephones. Typically the downstream bandwidth towards the users is much higher than the upstream bandwidth towards the network. Thus users are able to retrieve content at higher speeds than deliver content. In such scenario, the concentrator may receive playlists from a number of mobile users with the available video fragments. Other users are then able to request the playlist and retrieve media content in the playlist. In this scenario, the first interface is between the mobile terminals providing the video fragments and the second interface is between the concentrator and the users requesting the video interface. In some cases these interfaces may be towards the same physical network, such as from a mobile telephone to another mobile telephone. However, the first interface has a much lower bandwidth than the second interface and thus both interfaces have different available resources. In addition, the price for each connection may be different. A user may have to pay more to upload data than to download data, thus a user providing content may have a much higher bill than a user who only retrieves content.

By using the concentrator to distribute the playlist and to store and forward the media items, the load on the more expensive link or the link with less resources available may be reduced. This way a user may only have to upload a media fragment once to make it available to the general public. The concentrator only needs to contact the mobile device if the media fragment has changed or if new fragments were added and are requested. Furthermore, the user may control when information is pulled towards to the concentrator by making the new content available at a particular time of the day, for instance when price rates are lower or by updating the playlist at a convenient time of the day.

Optionally for the concentrator for storing and forwarding media content according to the present invention, the second communication network is a fixed communication network.

Further optionally for the concentrator for storing and forwarding media content according to the present invention, the fixed communication network is one or more of the following:
- a Digital Subscriber Line network or xDSL network;
- a Cable network;
- an Hybrid Fibre Coax network or HFC network;
- a Passive Optical Network or PON network; and
- an Active Optical Network or AON network.

These fixed network technologies generally provide high bandwidth and bit rates to the users thereof. These technologies are therefore ideal to retrieve large amounts of content from a content server or concentrator. For instance, in a scenario where few users on limited bandwidth connections provide content for the general public. Typically the general public uses access networks such as xDSL or cable networks to access media content from their computers or set-top boxes. In combination with a mobile content server such as a handheld device connected via for instance UMTS an example scenario is given wherein the invention is extremely advantageous.

Optionally the concentrator for storing and forwarding media content according to the present invention further comprises means for determining which media items or parts of those media items are retrieved from the content server or the one or more intermediate concentrators or both for storing.

When the playlist is updated, some or all of the stored content may become out of date. For instance when all the media content is replaced with a higher quality version of the content, the playlist may be updated to reflect this. However, the media items on storage in the concentrator are then out-of-date as these are the lower quality version of the media items. Of course, only some media items may be changed in quality or some items may be added or deleted. In general, changes in the playlist may affect the stored media content in a concentrator. It may therefore be beneficial to enable the concentrator to determine which media content should be updated from the content server.

The concentrator may for instance retrieve new versions of popular media items because it is likely that these will be requested by media players whereas new versions of content that is rarely requested will be retrieved on first request. In addition, the content server may use similar selection for new content. For instance when a new episode of a popular television series is released, the concentrator may retrieve that content before it is requested based on the popularity of older episodes. This way it can deliver the new episode upon first request with a higher response time because it does not have to retrieve the new episode from the content server.

Optionally, the concentrator for storing and forwarding media content according to the present invention further comprises means for resuming delivery of a requested media item after the delivery was interrupted.

Various problems may cause a service interruption during delivery of media items. Power outage at the media player side or the concentrator side, network failure between the concentrator and the media player, hardware failure at the media player side, etc. can result in service interruption. The concentrator according to the present invention may be able to track such interruptions and may provide the possibility to resume the media delivery once the cause of the problem is resolved. Of course, depending on the cause this may be a simple or a more complex task. If both the concentrator and the media player function correctly and there is only a network outage, they are able to keep track of where in the delivery the interruption occurred. This makes it possible to easily resume media delivery. However, if the concentrator fails for a short period of time, it may have lost track of all active media deliveries which makes resuming harder. The concentrator may however track in real-time or almost real-time where each individual media delivery is and store that information in a non-volatile memory. This way it may have an exact or good estimate of the position where the delivery was interrupted by extracting the tracking information from the non-volatile memory.

The present invention further relates to a content server for distributing media content comprising:
- means for automatically sending an update of a playlist indicative for available media content in the content server to a concentrator each time the available media content changes; and
- means for sending a media item or parts of a media item to the concentrator upon request by the concentrator.

A typical content server is able to provide a playlist to other devices which request the playlist and is able to deliver media content to devices which request the media content. However, this way the devices may end up with an out-of-date playlist if they do not request a new version regularly. Even with regular requests for playlist updates, there is a possible timeframe wherein the devices use an out-of-date playlist. A content server may therefore be adapted to automatically send an update to all the concentrators when the playlist changes. This way the concentrators are always aware of the available media content and the concentrators are able to update their storage or provide up-to-date playlists to other concentrators or media players.

The present invention further also relates to a method for storing and forwarding media content by a concentrator from a content server to a plurality of media players, the method comprising:
- storing at least parts of the media content; and
- retrieving missing parts of a media item requested by one of the media players from the content server or one or more intermediate concentrators or both; and
- delivering the media item to one of the media players,
characterized in that said method further comprises:
- means for automatically receiving an update for a playlist indicative for the available media content from the content server each time the playlist has changed.

### Brief Description of the Drawings

Fig. 1 illustrates a topological overview of a communication system wherein an embodiment of the concentrator and content server according to the present invention is used; and
Fig. 2 illustrates a topological overview of a communication system wherein multiple concentrators according to the present invention are used in cascade.

### Detailed Description of Embodiment(s)

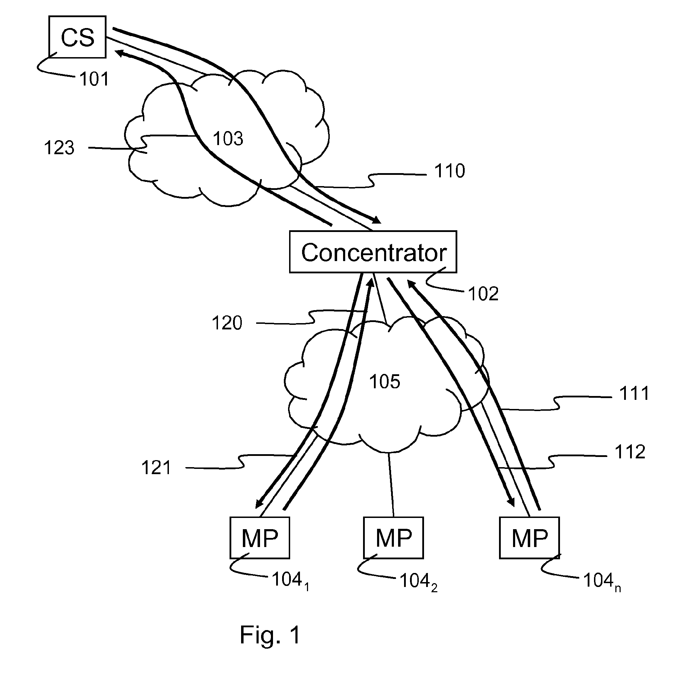

Fig. 1 shows a topological overview of nodes and networks connecting these nodes wherein one of the nodes is a concentrator 102 according to the present invention and one node is a content server according to the present invention, CS or 101.

Fig. 1 shows the content server 101 which is connected to concentrator 102 by communication network 103. In this particular example, CS 101 is a mobile device offering video fragments to the general public and network 103 is a mobile communication network such as a GPRS or UMTS network. The concentrator is further connected to a number of media players, MP or 104₁ to 104ₙ by access network 105.

The CS 101 hosts a number of media items which can be requested by MP 104₁ to 104ₙ and in addition the CS 101 has a playlist with all the available media items that can be retrieved from CS 101. For this particular example we assume that the concentrator 102 has received at least one complete playlist and thus has a list of the available media items. When CS 101 is updated with a new media item, it sends an update of the playlist to concentrator 102 through network 103 as is indicated by arrow 110. Upon receipt of the playlist update, concentrator 102 is able to determine which changes were made. Based on these changes, the concentrator 102 can retrieve new content or changed content from the CS 101. The concentrator 102 may retrieve the new or changed media items entirely or at least a part thereof. For instance if the changes relate to a popular series of media items, the concentrator can retrieve the new item before it has been requested by a media player. After the update is received, the concentrator may or may not retrieve new content from the CS 101 or may delete outdated content if needed.

Fig. 1 further shows through arrow 111 that a media player 104ₙ requests the playlist from the concentrator 102. The concentrator delivers the playlist in step 112. Similarly, media player 104₁ is assumed to have requested and received the playlist and thus is able to request available content from concentrator 102. The MP 104₁ requests a media item, e.g. a movie, a TV-show, a song, a report, a file, a game, a software package, etc., in step 120 of which only a part is available in concentrator 102. The concentrator delivers the available part in step 121 and simultaneously commences with retrieving the missing part from CS 101 in step 123. The newly retrieved parts of media content are delivered to MP 104₁ when they are received by the concentrator 102 and when the stream reaches the point where these parts fit in. If the stream is interrupted, the concentrator 102 activates a resume function. This way the concentrator 102 is aware of where the stream was interrupted and is able to deliver the rest of the stream once MP 104₁ becomes available again. The concentrator 102 may for instance notice an interruption of the stream when network connectivity is lost or when no responses are received from MP 104₁.

It should be noted that although there is a single network shown between the concentrator and the media players, there may be a larger number of networks involved. For instance, each media player may be accessed through a different network. In addition, there may be more than three media players that request content.

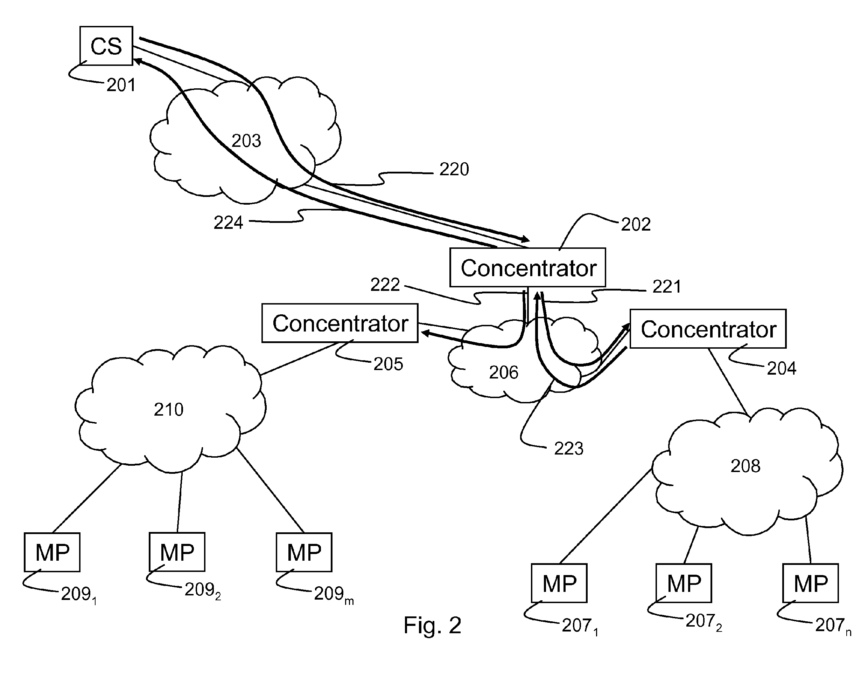

Fig. 2 illustrates the topology of a network with multiple, cascaded concentrators operating according to the present invention. Thus, one concentrator is able to receive requests from other concentrators and is able to deliver information to other concentrators.

In Fig. 2 the content server, CS or 201, is connected to concentrator 202 through a network 203. The concentrator 202 is connected to a second concentrator 204 by network 206 and to a third concentrator 205 by the same network 206. Of course there may be different networks between concentrator 202 and 204 and between 202 and 205. The second concentrator 204 is connected to N media players 207₁ to 207ₙ through access network 208 and the third concentrator 205 is connected to M media players 209₁ to 209ₘ through access network 210.

In this figure, arrow 220 indicates the delivery of the updated playlist from CS 201 to concentrator 202 after an update of the available media content in CS 201. The concentrator 202 replicates the update to concentrators 204 and 205 as is indicated by arrow 221. This results in all the concentrators having the most recent playlist while only a single push of the playlist to a concentrator is needed. Without the cascading, the CS 201 would have to push the playlist to each concentrator 202, 204 and 205. When a media item is requested by one of the media players connected to concentrator 204, for instance by MP 207₂, the concentrator verifies whether it is able to deliver the requested media item. If this is not the case, it will attempt to retrieve the media item from concentrator 202 as is indicated by arrow 223. If concentrator 202 is not able to deliver the media item, or only has part thereof, it will retrieve the item of the missing parts from the content server 201 as is indicated by arrow 224. Alternatively, the concentrator 202 could check whether concentrator 205 has the requested content before concentrator 202 retrieves it from the CS 201.

It should be noted that although there are only three concentrators shown, there may be more concentrators in use. For instance, there may be one concentrator for each subgroup of users or users connected to the same access network. There may also be more than one concentrator per group of users or access network, for instance for load balancing. Furthermore, there may be more than two levels of concentrators in the cascade or all concentrators may be able to interact with each other but without being split into multiple levels. Of course the number of media players as shown in Fig. 2 is not meant as the exact number of media players involved. There may be more than three media players per concentrator and there is no need to have the same number of media players for each concentrator. In addition, there is a hierarchy shown amongst the concentrators, but the higher located concentrator is not limited to serving other concentrators. The higher located concentrator may also have a number of media players connected thereto.

It should also be noted that although the drawings show a single content server, there is no need for just one content server. For instance a central trusted party may provide playlists whereas a number of content servers are available to serve the content. For instance, there may be a different content server for each type of media such as a content server for television shows, a content server for movies, a content server for home made clips, etc. Alternatively there may be a content server with various types of content but for each content provider. Either of these setups may also be extended with redundant content servers which provides alternative sources when a content server fails or which may be used to even load over various content server to avoid overload.

The concentrators may be stand-alone devices which are part of various communication networks or may be parts of other network nodes. For instance, the concentrator may be integrated in edge nodes, streaming media servers, access nodes, etc. It generally does not matter wherein the concentrator is integrated or whether it is a stand-alone device. The concentrator only needs a link to a content source being a content server or one or more other concentrators and one or more media players.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second" and the like, when used in the description or in the claims are introduced to distinguish between similar elements or steps and are not necessarily describing a sequential or chronological order. It is to be understood that the terms so used are interchangeable under appropriate circumstances and embodiments of the invention are capable of operating according to the present invention in other sequences, or in orientations different from the one(s) described or illustrated above.

## Claims

1. A concentrator for storing and forwarding media content from a content server to a plurality of media players, said concentrator comprising:
- means for storing at least parts of said media content; and
- means for retrieving missing parts of a media item requested by one of said media players from said content server or one or more intermediate concentrators or both; and
- means for delivering said media item to said one of said media players,
**characterized in that** said concentrator further comprises:
- means for automatically receiving an update for a playlist indicative for the available media content from said content server each time said playlist has changed.

2. The concentrator for storing and forwarding media content according to claim 1, **characterized in that** said means for automatically receiving an update for a playlist comprise an interface to a first communication network and said means for delivering said media item comprise an interface to a second communication network, said first network and said second network having different resources.

3. The concentrator for storing and forwarding media content according to claim 2, **characterized in that** said first communication network is a wireless communication network.

4. The concentrator for storing and forwarding media content according to claim 3, **characterized in that** said wireless communication network is one or more of the following:
- a Global System for Mobile communications or GSM network;
- a General Packet Radio Service or GPRS network;
- an Universal Mobile Telecommunications Services or UMTS network;
- a High-Speed Packet Access or HSPA network; and
- a WiFi network.

5. The concentrator for storing and forwarding media content according to claim 2, **characterized in that** said second communication network is a fixed communication network.

6. The concentrator for storing and forwarding media content according to claim 5, **characterized in that** said fixed communication network is one or more of the following:
- a Digital Subscriber Line network or xDSL network;
- a Cable network;
- an Hybrid Fibre Coax network or HFC network;
- a Passive Optical Network or PON network; and
- an Active Optical Network or AON network.

7. The concentrator for storing and forwarding media content according to claim 1, **characterized in that** said concentrator further comprises means for determining which media items or parts of said media items are retrieved from said content server or said one or more intermediate concentrators or both for storing.

8. The concentrator for storing and forwarding media content according to claim 1, **characterized in that** said concentrator further comprises means for resuming delivery of a requested media item after said delivery was interrupted.

9. A content server for distributing media content comprising:
- means for automatically sending an update of a playlist indicative for available media content in said content server to a concentrator each time said available media content changes; and
- means for sending a media item or parts of a media item to said concentrator upon request by said concentrator.

10. A method for storing and forwarding media content by a concentrator from a content server to a plurality of media players, said method comprising:
- storing at least parts of said media content; and
- retrieving missing parts of a media item requested by one of said media players from said content server or one or more intermediate concentrators or both; and
- delivering said media item to said one of said media players,
**characterized in that** said method further comprises:
- means for automatically receiving an update for a playlist indicative for the available media content from said content server each time said playlist has changed.
